# EUROPEAN PATENT APPLICATION

(11) **EP 0 834 673 A2**
(43) Date of publication of application: **08.04.1998**
(21) Application number: 97307169.9
(22) Date of filing: 16.09.1997
(51) Int. Cl.: F16F 13/14

(54) **Vibration damping assemblies**

(30) Priority: 25.09.1996 GB 9619986
(71) Applicant: DRAFTEX INDUSTRIES LIMITED, Edinburgh EH2 3AP, Scotland (GB)
(72) Inventor: Tournier, Pascal, 44330 Le Pallet (FR)
(74) Representative: Knott, Stephen Gilbert

(57) **Abstract**

An engine mount comprises a rigid generally cylindrical member (14) for attachment via an armature (10) to the chassis or body of a vehicle. A central rigid insert (20) is bolted to the engine and is supported by a one-piece moulded support (22) made of resilient material. The resilient support (22) defines a working chamber (62) which is connected to two interconnected compensation chambers (42,44) via a restricted-flow conduit (64,66) for damping transfer of hydraulic fluid and thus damping vibrations. High frequency vibrations cause a flexible membrane (60) to vibrate in a space defined between a rigid apertured plate (58) and an apertured part (56) of the cylindrical element (14). The apertures (56) expose the membrane (60) to atmospheric pressure. Abutments (46,50) are mounted within the compensation chambers (42,44) to limit transverse vibration. The fluid within the compensation chambers (42,44) and the grooved outer surfaces of the abutments (46,50), reduce their effect on vertical vibrations.

## Description

The invention relates to a vibration damping assembly for damping vibration between two relatively vibratable rigid members, comprising a first rigid element defining a space and for connection to one of the members, a second element positioned within the space for connection to the other rigid member, resilient material mounted within the space and extending between the first and second elements for resiliently damping vibration between the two members, the resilient material at least partly defining chamber means containing hydraulic fluid, and flexible wall means which partly defines the chamber means and has an internal face exposed to the hydraulic fluid within the chamber means, the flexible wall means being mounted for limited to and fro movement in response to the vibrations whereby to permit corresponding movement of the hydraulic fluid within the chamber means for damping the vibrations.

Such an assembly is known from GB-A-2 291 691. The invention aims to optimise the construction and manufacture of such an assembly. The known assembly is therefore characterised, in accordance with the invention, in that the resilient material is one-piece moulding which includes the flexible wall means.

In a second aspect, the invention relates to a vibration damping assembly for damping vibrations between two relatively vibratable rigid members, comprising a first relatively rigid element defining a generally tubular space and for connection to one of the members, a second element positioned within the space for connection to the other member, resilient material mounted within the space and extending between the two elements for resiliently damping vibrations between the two members, the resilient material at least partly defining a main chamber containing hydraulic fluid and at least one compensation chamber containing hydraulic fluid and connected to the main chamber by means defining a restricted flow path, the main chamber being positioned so that vibrations of the two members relative to each other in a predetermined direction cause displacement of hydraulic fluid between the two chambers through the restricted flow path which damps the vibrations, and abutment means positioned between the resilient material and the first rigid element for resisting movement of the second element in a generally outward direction with reference to the tubular space and above a predetermined amplitude.

Such an assembly is also known from GB-A-2 291 691. In this known arrangement, the abutment means is situated within the main chamber. In accordance with the second aspect of the invention, this known assembly is characterised in that the abutment means is mounted outside the main chamber.

In a third aspect, the invention relates to a vibration damping assembly for damping vibrations between two relatively vibratable rigid members, comprising a first rigid element defining a space and for connection to one of the members, a second element positioned within the space for connection to the other member, resilient material mounted within the space and extending between the first and second elements for damping vibration between the two members, the resilient material at least partly defining chamber means which contains hydraulic fluid and which is also partly defined by flexible wall means being secured along two spaced edges so that the area between them is capable of the limited to and fro movement in response to the vibrations whereby to permit corresponding movement of the hydraulic fluid within the chamber means for damping the vibrations.

Such an assembly is also known from GB-A-2 291 691. In this known assembly, at least one of the edges of the flexible wall means is secured in position by means of an insert which has to be separately placed in position within the assembly. The invention aims to overcome this problem.

Therefore, this known form of assembly is characterised, in accordance with the third aspect of the invention, in that along at least one of the edges the flexible wall means is secured clampingly.

Vibration damping assemblies embodying the invention will now be described, by way of example only, with reference to the accompanying diagrammatic drawings in which:
Figure 1 is a cross-section through one of the damping assemblies, taken on the line I-I of Figure 2;
Figure 2 is a section on the line II-II of Figure 1;
Figure 3 is a cross-section through part of the assembly of Figures 1 and 2, but showing a stage during its manufacture by a moulding operation;
Figure 4 is a perspective view of a peripheral insert in the assembly of Figure 1;
Figure 5 is a cross-section through part of a modified form of the assembly of Figure 1;
Figure 5A is a part-section on the line VA of Figure 5;
Figure 6 is a plan view of two integrally connected abutments for use in one of the assemblies;
Figure 7 is a side view of the integrally connected abutments of Figure 6;
Figure 8 is a section on the line VIII-VIII of Figure 7;
Figure 9 is a section on the line IX-IX of Figure 7;
Figure 10 is a cross-section corresponding to Figure 1 but showing another modified form of one of the assemblies;
Figure 11 is a cross-section corresponding to Figure 1 but through another one of the assemblies, taken on the line XI-XI of Figure 12;
Figure 12 is a section on the line XII-XII of Figure 11;
Figure 13 corresponds to Figure 12 but shows a modified construction; and
Figure 14 is a perspective view of a peripheral insert in the assembly of Figure 10 or Figure 12.

Corresponding items in the different Figures have the same reference numbers.

The vibration damping assemblies to be described are particularly suitable as engine mounts for supporting the engines of motor vehicles with respect to the body or chassis of the vehicle. They operate to damp vibrations of the engine and to reduce the transmission of such vibrations to the vehicle body. Such vibrations may be caused by the moving parts within the engine. In addition, however, the engine mounts operate to damp movements of the engine caused by the inertia of the engine mass and resulting from sudden changes in the profile of the road surface, from acceleration or braking of the vehicle, or during gear changing. The engine mounts to be described are of the axi-hydraulic type.

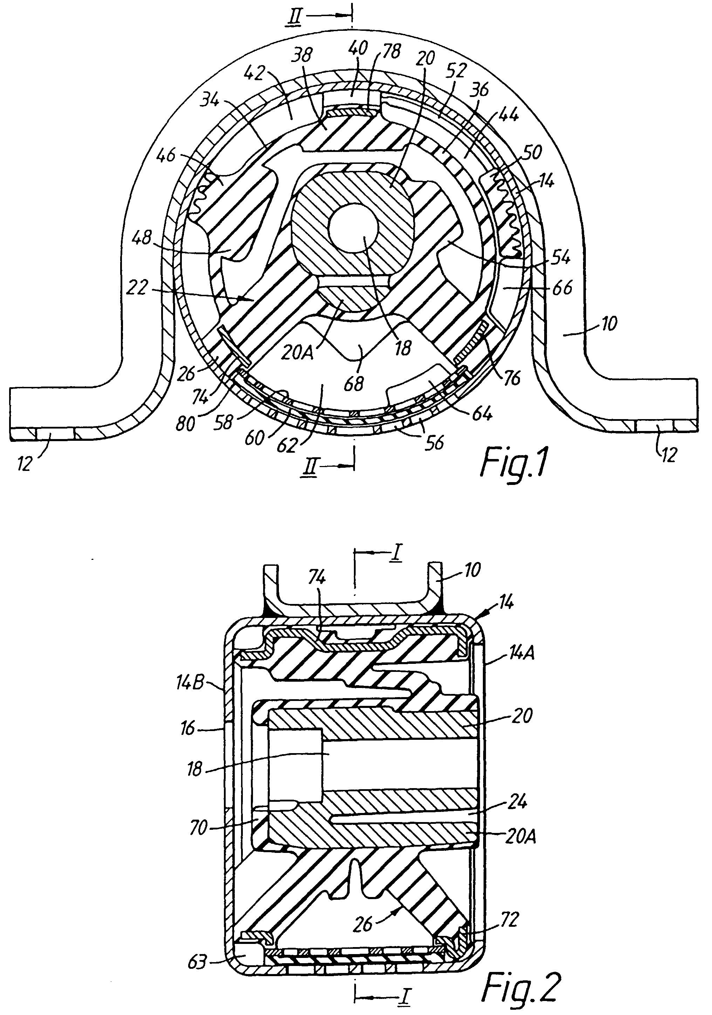

The engine mount of Figures 1 and 2 is secured to the vehicle body or chassis by an armature 10 which is made of metal and fixed in position by bolts extending through holes 12. The armature is welded to a metal tube 14 which is open at one end 14A (Figure 2) and closed off at the opposite end 14B except for a hole 16.

The engine itself is supported on the engine mount by means of a bolt (not shown) passing through a bore 18 in a metal insert 20 which is secured within a stiff rubber support 22. The insert 20 is integrally formed with a leaf portion 20A which is rendered slightly flexible by means of a slit 24 (see Figure 2).

The rubber support 22 is moulded to provide a stiff outwardly directed wall 26, (see Figure 2) whose distal edge make contact with the tube 14.

The rubber support 22 also has integral flexible membranes 34 and 36 which support a thicker upper part 38 (see Figure 2 also) which makes contact with the tube 14 but provides a central longitudinally extending gap 40. A first compensation chamber 42 is thus defined between membrane 34 and tube 14, and a second compensation chamber 44 is defined between membrane 36 and the tube 14. The two compensation chambers are integrally connected through the longitudinal passage 40 and their purpose is explained below.

Membrane 34 carries an abutment 46 facing outwardly and a corresponding abutment 48 facing inwardly towards the central insert 20. Within the compensation chamber 44, an abutment 50 is positioned, supported by a flexible integrally moulded arm 52.

The outwardly facing surfaces of the abutments 46 and 50 are grooved.

The central part of the support 22 carries an integral abutment 54 generally aligned with the abutment 50.

The lowermost part of the tube 14 is provided with apertures 56. A stiff arcuately shaped plate 58 is secured to the legs 26,28 of the rubber support and overlaps the apertured portion of the tube 14 but is spaced from the latter. Within this space, a flexible membrane 60 is supported. This membrane 60 and the wall 26 together define a main chamber 62. Chamber 62 is connected to chamber 44 via a conduit 63 the open ends of which are indicated at 64 and 66. Chamber 62 is thus also connected to compensation chamber 42 through passageway 40.

The rubber support 22 has an integral abutment 68 within the main chamber 62.

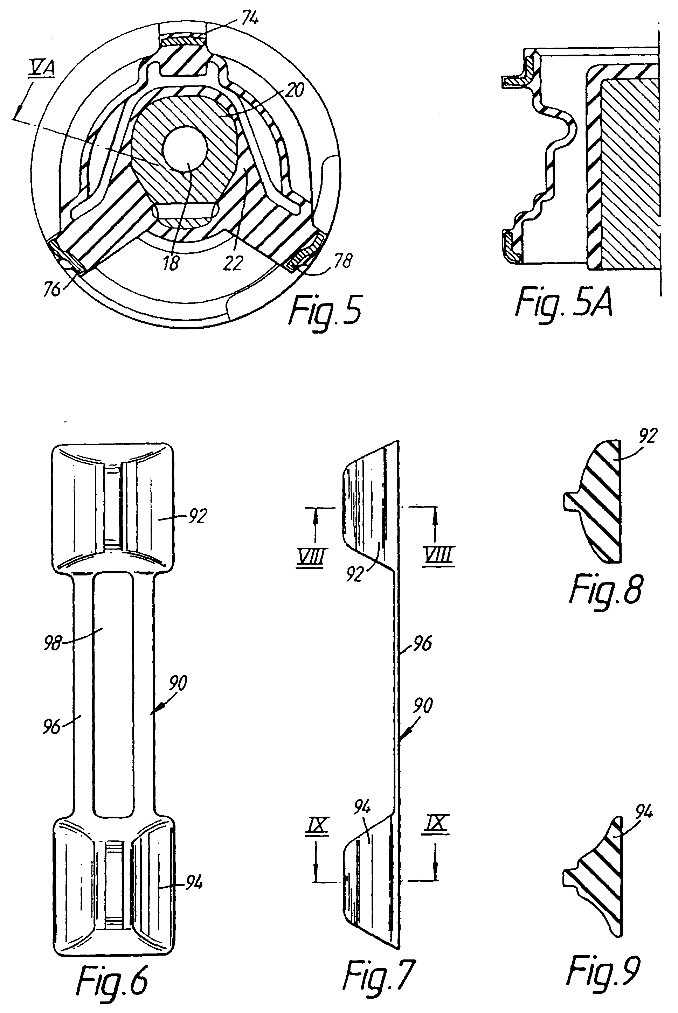

The rubber support 22 is reinforced by an open-sided metal tube 69 (see Figure 4), preferably moulded from aluminium, having two circular ends 70,72 connected by axially directed links 74,76,78. The tube 69 can be produced from flat strip which is cut in the required manner, rolled up and welded along a line 79.

In operation, the rubber support 22 supports the static load imposed by the mass of the engine. The support 22 will be subjected to the vibrations of the engine relative to the vehicle body. The detailed operation depends on the magnitude, frequency and direction of these vibrations.

The first case to be considered comprises small amplitude vibrations caused by the running of the engine. Such vibrations in a vertical direction are transmitted to the hydraulic fluid within the main chamber 62. These vibrations are mainly accommodated by flexing of the membrane 60, and the pressure within the main chamber 62 is limited to atmospheric pressure because the outside surface of the membrane 60 is open to the atmosphere through the apertures 56. In this way, the vibrations are damped.

Laterally directed small magnitude vibrations are generally damped by the rubber support 22, acting in shear. The abutments 46,48,50 and 54 do not come into operation when the engine is idling.

As the frequency of the vibrations increases, the effect of the central insert 20 becomes more pronounced and provides an enhanced damping effect. The flexible leaf 20A acts as a flexing spring. The vibrating mass is constituted in part by the flexible leaf 20A, the vibrating rubber mass and the hydraulic fluid within the main chamber 62. The effect of the vibrating mass is to reduce the transmission of vibrations at frequencies above the resonant frequency of the vibrating mass.

When the engine is under load, the abutments 46 and 50 may move into and out of contact with the inner surface of the tube 14, because of flexing of the membranes 34,36. The grooves in these abutments have the effect of reducing the shear force acting between the abutments and the tube 14, and this effect is enhanced by the lubricating action of the hydraulic fluid within the compensation chambers 42,44; transmission of vibrations is reduced.

Larger amplitude vertical vibrations can take place, such as caused by large changes in the profile of the road surface. In response to such larger amplitude variations, the flexible membrane 60 is held against the apertured surface of the tube 14 and its flexing cannot accommodate the fluid movement. The fluid is thus forced to and fro within the conduit 63 via the apertures 64,66 - that is, the fluid oscillates between the main chamber 62 and the compensation chambers 42,44 and provides a dynamic damping effect caused by movement of the hydraulic mass.

The membranes 34,36 are relatively flexible and provide large variation in volume for the compensation chambers 42,44 in response to small pressure changes.

In the case where the vertical vibrations are very large, the abutments 68 and 38 limit the permitted displacement in the vertical direction of the engine.

In the case of longitudinally directed vibrations of significant amplitude, such as caused by large changes in engine torque (during gear changing for example, or during heavy braking), the central insert 20 will move in alternate sideways directions. In one direction, it will come into contact with the abutment 48 which will in turn force the abutment 46 against the tube 14. In the opposite direction, the abutment 54 will, via the membrane 36, press the abutment 50 against the tube 14. In each case, the grooves in the abutments 46,50 provide progressive limitation of the vibrations, assisted by the damping effect of the fluid within the compensation chambers 42,44. The fluid passes between the two chambers and this provides a phase delay in the damping effect.

In the case of significant transverse vibrations, an end part 70 of the rubber support 22 comes in contact with the end wall 14B of the tube 14.

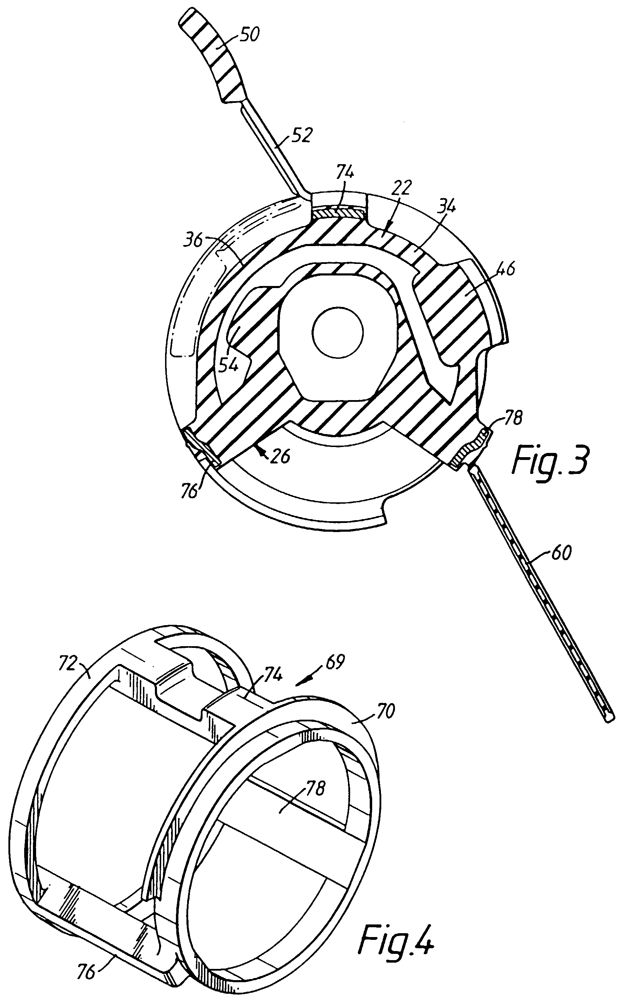

Figure 3 shows how the rubber support 22 can be moulded integrally with one edge of the membrane 60 and also with the abutment 50 with its connecting leaf 52. When the support 22 is mounted within the tube 14 (see Figure 1), the opposite edge of the membrane 20 and the arcuate plate 58 are secured in position at 80 by being clamped there between the resilient material 22 and the tube 14. This produces an advantageously simple method of assembly.

During the moulding process, the tubular insert 69 and the central insert 20 are placed in the mould so as to become incorporated in the moulding. During assembly, the aperture 14A of the tube 14 (see Figure 2) has a diameter equal to the maximum internal diameter of the tube 14 and thus allows entry of the moulding. The rim around the aperture is then produced by a metal forming operation to hold the moulding in position.

Figures 5 and 5A shows a modified construction in which the membranes 34,36 are of bellows-shape.

Figures 6,7,8 and 9 show a modification in which the abutments 46 and 50 in the embodiment of Figures 1 and 2 are replaced by a separately moulded part 90 carrying two abutments 92,94 at its opposite end and with a connecting arm 96 between them having a slot 98. Figures 8 and 9 show the cross-sectional shapes of the abutments 92,94. In use, the part 90 is placed over the integrally moulded support 22 so that the abutments 92,94 are respectively positioned within the compensation chambers 42,44, the arms 96 passing through the passage 40 (Figure 2).

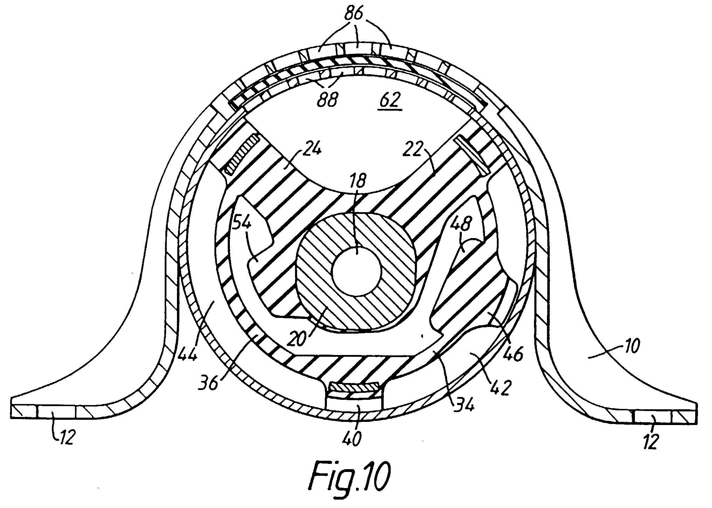

Figure 10 shows a modified form of the engine mount of Figures 1 and 2.

In the engine mount of Figure 10, the flexible membrane 60, for damping high frequency small amplitude vibrations, is positioned in a space between the armature 10 and the tube 14, the corresponding regions being apertured at 86 and 88. In the engine mount shown in Figure 10, the abutment 50 is omitted, but can be provided if required.

The compensation chambers 42,44 and the main chamber 62 are filled with hydraulic fluid, which can comprise a mixture of water and anti-freeze. Filling can take place by immersion in a bath or under vacuum. It is necessary to ensure that the amount of fluid in the chambers 42,44 and 62 is controlled accurately, in order to ensure that the membrane 60 is correctly positioned, at rest, within the space between the plate 58 and the apertured part of the tube 14 of Figure 1 and correspondingly in Figure 10.

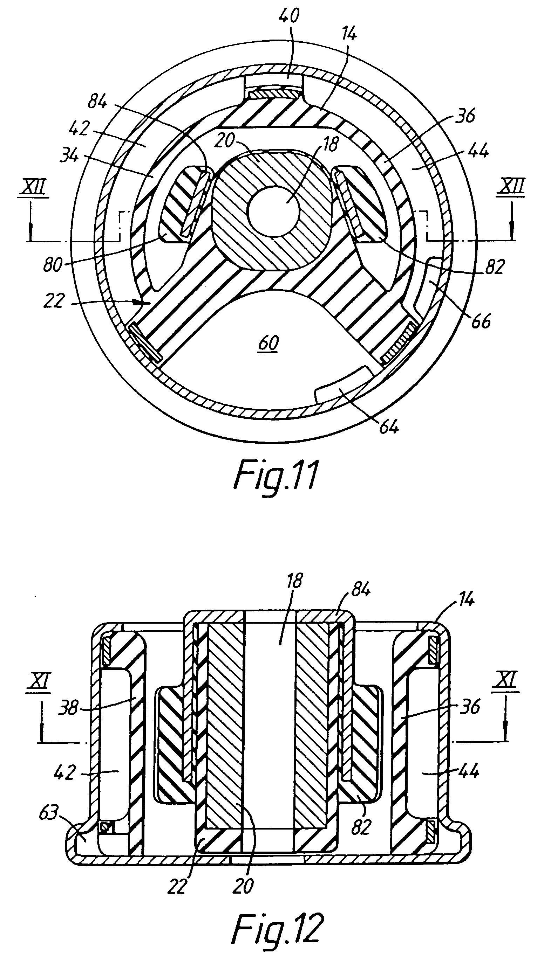

In a modification, however, the flexible membrane 60 is omitted, in which case the apertures 56 in the tube 18, together with the arcuate plate 54, would also be omitted. Such a simplified engine mount is less expensive to produce, but the transmission of high frequency vibrations is increased. Figures 11 and 12 show such an engine mount in which parts corresponding to those in Figures 1 and 2 are similarly referenced. Figures 11 and 12 show other modifications. The abutments 46,48,54 and 50 of Figure 1 are omitted. Instead, abutments 80 and 82 are attached to the outside of the central insert 18 and the rubber support 22 by a metal armature 84. In response to large transverse vibrations, the abutments 80,82 will alternately force the flexible membranes 34 and 36 towards the tube 14. The hydraulic fluid thus moves between the two compensation chambers 42,44 via the passageway 40. In response to vertical vibrations, the fluid moves to and fro between the main chamber 60 and the compensation chambers 42,44 via the connecting conduit 63 which, in this case, extends around the periphery of the tube 14 and is connected to the main chamber 60 by the aperture 64.

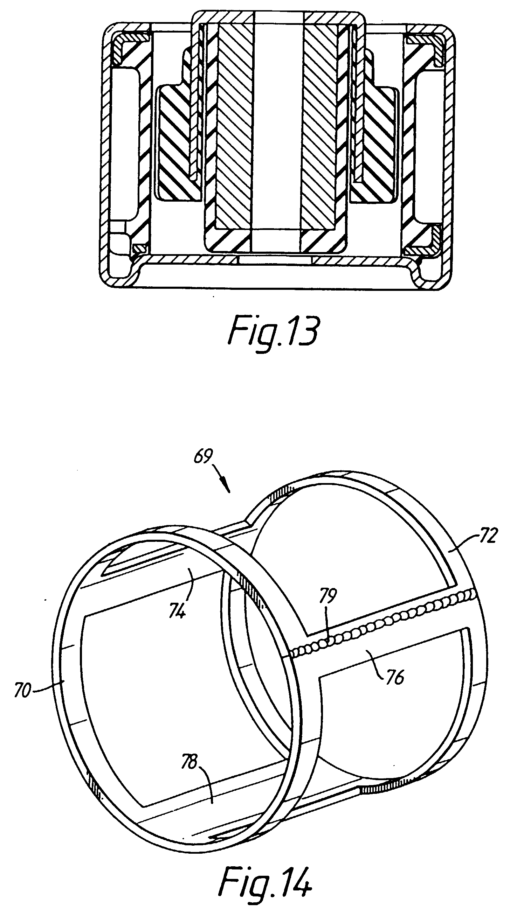

Figure 13 shows a modification of the engine mount of Figure 12. In Figure 13, the connecting conduit 63 is positioned in the base of the tube 14 instead of around its periphery.

Figure 14 corresponds to Figure 4 but shows an insert 69 suitable for the engine mounts of Figures 10 and 12.

## Claims

1. A vibration damping assembly for damping vibration between two relatively vibratable rigid members, comprising a first rigid element (14) defining a space and for connection to one of the members, a second element (20) positioned within the space for connection to the other rigid member, resilient material (22) mounted within the space and extending between the first and second elements (14,20) for resiliently damping vibration between the two members, the resilient material (22) at least partly defining chamber means (62) containing hydraulic fluid, and flexible wall means (60) which partly defines the chamber means (62) and has an internal face exposed to the hydraulic fluid within the chamber means (62), the flexible wall means (60) being mounted for limited to and fro movement in response to the vibrations whereby to permit corresponding movement of the hydraulic fluid within the chamber means (60) for damping the vibrations, characterised in that the resilient material (22) is one-piece moulding which includes the flexible wall means (60).

2. An assembly according to claim 1, characterised in that the flexible wall means (60) has an external face exposed to atmospheric pressure.

3. An assembly according to claim 2, characterised in that the external face of the flexible wall means (60) is exposed to the atmospheric pressure through an apertured part (56) of the first element (14).

4. An assembly according to claim 3, characterised by a rigid apertured member (58) within the chamber means (60) and overlying the internal face of the flexible wall means (60), the apertured member (58) being spaced by a predetermined spacing from the apertured part (56) of the first element (14) and the flexible wall means (60) being located within this spacing.

5. An assembly according to any preceding claim, characterised in that the flexible wall means (60) has one of its edges integrally connected in the one-piece moulding to the resilient material (22) and has another of its edges not integrally connected to the resilient material (14), the other edge being clampingly secured by the resilient material (22).

6. An assembly according to claim 5, characterised in that the other edge is clampingly secured between the resilient material (22) and the first rigid element (14).

7. An assembly according to any preceding claim, characterised in that the resilient material (22) at least partly defines further chamber means (42,44) containing hydraulic fluid, the two chamber means (62;42,44) being interconnected by means (64,66) defining a restricted flow path between them through which the fluid flows in response to said vibrations within a predetermined range of frequency and amplitude, the flow path (64,66) damping such vibrations.

8. An assembly according to claim 7, characterised in that the further chamber means (42,44) is at least partly defined by a flexible membrane (52) forming part of the one-piece moulding with the resilient means (22).

9. An assembly according to claim 7 or 8, characterised in that the further chamber means (42,44) is at least partly defined by the first rigid element (14), and by abutment means (50;90,92,94) mounted within the further chamber means (44), the abutment means being normally mounted with clearance but being forced into contact with the first element (14) by part (54) of the resilient means (22) in response to vibration in a predetermined direction and exceeding a predetermined amplitude.

10. An assembly according to claim 9, characterised in that the predetermined direction is a generally outward direction with respect to the space, and in that the surface of the abutment means (50) coming into contact with the first element (14) is provided with one or more grooves extending in a generally longitudinal direction with respect to the tubular space whereby to reduce resistance to vibration in a direction generally transverse to the outward direction.

11. An assembly according to claim 9 or 10, characterised in that the abutment means (90,92,94) is separate from the one-piece moulding (22).

12. An assembly according to claim 9 or 10, characterised in that the abutment means (50) is part of the one-piece moulding (22).

13. An assembly according to any preceding claim, characterised in that the second element (20) is a rigid element.

14. An assembly according to claim 13, characterised in that the second element (20) is incorporated to the one-piece moulding (22).

15. An assembly according to any preceding claim, characterised in that the one-piece moulding (22) is reinforced.

16. A vibration damping assembly for damping vibrations between two relatively vibratable rigid members, comprising a first relatively rigid element (14) defining a generally tubular space and for connection to one of the members, a second element (20) positioned within the space for connection to the other member, resilient material (22) mounted within the space and extending between the two elements (14,20) for resiliently damping vibrations between the two members, the resilient material (22) at least partly defining a main chamber (62) containing hydraulic fluid and at least one compensation chamber (42,44) containing hydraulic fluid and connected to the main chamber (60) by means (64,66) defining a restricted flow path, the main chamber (62) being positioned so that vibrations of the two members (14,20) relative to each other in a predetermined direction cause displacement of hydraulic fluid between the two chambers (62;42,44) through the restricted flow path which damps the vibrations, and abutment means (50;90,92,94) positioned between the resilient material (22) and the first rigid element (14) for resisting movement of the second element (20) in a generally outward direction with reference to the tubular space and above a predetermined amplitude, characterised in that the abutment means (50;90,92,94) is mounted outside the main chamber (62).

17. An assembly according to claim 15, characterised in that the abutment means (50;90,92,94) is mounted in the compensation chamber (42,44).

18. An assembly according to claim 16, characterised in that the abutment means (50;92,94) is moved into abutment with the first rigid element (14) by the movement in the outward direction, and in that a surface of the abutment means (50) closest the first rigid element (14) is provided with one or more grooves extending in a direction longitudinally of the tubular space whereby to limit damping of vibrations in directions transverse to the outward direction.

19. An assembly according to any one of claims 16 to 18, characterised in that the compensation chamber (42,44) is at least partly defined by a flexible membrane (52) integrally moulded with the resilient material (22).

20. An assembly according to claim 19, characterised in that the abutment means (50) is integrally connected to the flexible membrane (52).

21. A vibration damping assembly for damping vibrations between two relatively vibratable rigid members, comprising a first rigid element (14) defining a space and for connection to one of the members, a second element (20) positioned within the space for connection to the other member, resilient material (22) mounted within the space and extending between the first and second elements (14,20) for damping vibration between the two members, the resilient material (22) at least partly defining chamber means (62) which contains hydraulic fluid and which is also partly defined by flexible wall means (60) being secured along two spaced edges so that the area between them is capable of the limited to and fro movement in response to the vibrations whereby to permit corresponding movement of the hydraulic fluid within the chamber means (62) for damping the vibrations, characterised in that along at least one of the edges the flexible wall means (60) is secured clampingly.

22. An assembly according to claim 21, in which the said one edge is clampingly secured between the resilient material (22) and the first rigid element (14).

23. An assembly according to claim 21 or 22, characterised in that along the other said edge the flexible wall means (60) is secured by being integrally connected to the resilient material (22).

24. An assembly according to claim 23, characterised in that the flexible wall means (60) is integrally moulded with the resilient material (22).

25. An assembly according to any one of claims 21 to 24, characterised in that the flexible wall means (60) has an external face exposed to the atmospheric pressure outside the space.

26. An assembly according to claim 25, characterised in that the external face of the flexible wall means (60) is exposed to the atmospheric pressure by an apertured part (56) of the first element (14).

27. An assembly according to claim 26, characterised by a rigid apertured member (58) within the chamber means (62) and overlying the internal face of the flexible wall means (60), the apertured member (58) being spaced by a predetermined spacing from the apertured part (56) of the first element (14), the flexible wall means (60) being mounted within the said spacing.

28. An assembly according to any one of claims 21 to 27, characterised in that the resilient material (22) at least partly defines further chamber means (42,44) containing hydraulic fluid, the two chamber means (62;42,44) being interconnected by means defining a restricted flow path (64,66) between them through which the fluid flows in response to said vibrations within a predetermined range of frequency and amplitude, the flow damping such vibrations.

29. An assembly according to claim 28, characterised in that the further chamber means (42,44) is at least partly defined by the first rigid element (14); and including abutment means (50;92,94) mounted within the further chamber means (42,44), the abutment means (50;92,94) being forced against the first element (14) by part of the resilient means (22) in response to vibration in a predetermined direction and exceeding a predetermined amplitude.
